# EUROPEAN PATENT APPLICATION

(11) **EP 0 641 126 A2**
(43) Date of publication of application: **01.03.1995**
(21) Application number: 94113234.2
(22) Date of filing: 24.08.1994
(51) Int. Cl.: H04N 7/00

(54) **Apparatus for controlling transmission level of addition signal and transmitting/receiving addition signal in television system**

(30) Priority: 24.08.1993 JP 209588/93
(71) Applicant: NIPPON TELEVISION NETWORK CORPORATION, Tokyo,102-40 (JP); MATSUSHITA ELECTRIC INDUSTRIAL CO., LTD., Kadoma-shi, Osaka-fu, 571 (JP); KABUSHIKI KAISHA TOSHIBA, Kawasaki-shi, Kanagawa-ken 210 (JP)
(72) Inventor: Kawai, Kiyoyuki, Yokosuka-shi, Kanagawa-ken (JP); Kimata, Yoshihide, Tokyo (JP); Yasumoto, Yoshio, Nara-shi, Nara-ken (JP)
(74) Representative: Henkel, Feiler, Hänzel & Partner

(57) **Abstract**

In a television broadcasting signal of a wide screen having compatibility with a conventional receiver presently used, a multiplex signal of each of top and bottom panels can be transmitted without generating degradation of an S/N ratio at the time of regeneration, and without causing an erroneous operation such as synch separation when the broadcasting signal is received by the receiver. In a transmission side, the multiplex signal multiplexed to the top and bottom panels is modulated by an AM-modulator (312), a component close to a carrier of the AM-modulated signal is extracted by a BPF (313), and an amplitude thereof is detected, the amplitude of the component is limited by a non-linear circuit (314), a high frequency component thereof is removed through an LPF (316), and used as an amplitude adaptive signal, the amplitude adaptive signal is subtracted from the AM modulation signal by a subtracter (31), and multiplexed and transmitted to the top and bottom panels. In a receiving side, a component whose low frequency component of the AM modulation signal transmitted to each of the top and bottom panels is removed is extracted through a BPF (322), and an amplitude thereof is detected, the amplitude is limited by a non-linear circuit (324), a high frequency component of the output is removed through an LPF (325), and used as an amplitude adaptive signal, and added to the AM modulation signal, thereby regenerating an original multiplex signal of each of the top and bottom panels.

## Description

The present invention relates to an apparatus for adding an additional signal to a television broadcasting signal and transmit/receiving the signal, and more particularly to an apparatus for controlling a transmission level of the additional signal and transmitting/receiving the additional signal.

A television signal of a wide screen whose aspect ratio is 16:9 (hereinafter called as long widthwise image signal) cannot be displayed as it is by a broadcasting receiver having an aspect ratio of 4:3, which is presently used. There are several methods for providing compatibility in the long widthwise image signal so as to allow the long widthwise image signal to be displayed by the receiver presently used.

There is known a letter box system for transmitting a long widthwise image having an aspect ratio of 16:9 and 360 scanning lines [lines/frame] at the central portion (main panel) of a screen having an aspect ratio of 4:3 and 480 active scanning lines 480 [lines/frame] defined by the present NTSC system. In this case, since only image data using only a 3/4 of the active scanning lines defined by an original NTSC system can be transmitted to the main panel, vertical resolution is inevitably deteriorated to 3/4. On the other hand, in the television signal of the letter box system, there are areas each having 60 scanning lines [lines/frame], serving as non-imaging portions, at upper and lower non-image portions (top and bottom panels) of the screen.

There has been proposed a system for multiplexing an additional signal for compensating for deterioration of the image of the main panel by use of the top and bottom panels.

According to this system, the additional signals are multiplexed into 120 scanning lines of the encoded top and bottom panels. The multiplexed signals are compensation signals having a vertical high frequency component and horizontal low frequency component. The compensation signals are compressed in a direction of time, and multiplexed. The compensation signals have components, which are visually prominent on the screen in view of energy. The additional signals to be multiplexed in the non-imaging areas are regarded as merely noise to the conventional receiver presently used since the additional signals are not utilized in the conventional receiver presently used. Therefore, there is a possibility that the additional signal will be prominent as interference to the conventional receiver.

If a transmission level of the multiplex signal is lowered, the interference to the conventional receiver is reduced. On the other hand, in the receiver for the wide aspect ratio screen using the multiplex signal, there is a problem in that an S/N ratio of a regenerated compensation signal, which is the additional signal, is degraded. Due to this, the multiplex level cannot transmit to be low excessively. Moreover, perception of the multiplex signal interference depends on the setup level of the top and bottom panels. Generally, since the interference of the multiplex signal becomes imperceptive by setting the setup level to be closer to a black level, this is effective in reducing interference. However, in the NTSC system, the setup level is defined up to only OIRE. Due to this, if the setup level is reduced to a negative level, the reduced level is erroneously discriminated as a synch signal, and the synch separation circuit is erroneously operated.

As mentioned above, in the television broadcasting of the letter box system holding compatibility with the system, which is conventionally used, an image helper signal (additional signal) is multiplexed in the top and bottom panels. However, there is possibility that the multiplex signals of the top and bottom panels will be prominent as interference to the conventional receiver presently used. Due to this, it is needed that prominence of the multiplex signal as interference be reduced. The reduction of the multiplex level is directly effective in decreasing interference. However, in a new high grade receiver, which needs a helper signal if the multiplex signal is reduced, there occurs a problem in that the S/N ratio is degraded at the time of regeneration. Moreover, the reduction of the setup level is effective in decreasing the interference. However, there is possibility an erroneous operation of the synch separation of the receiver will occur.

An object of the present invention is to provide an apparatus for controlling a transmission DC level of an additional signal, and transmitting/receiving the additional signal of a television system. According to the present invention, in a television broadcasting signal of a wide screen having compatibility with a conventional receiver presently used, a multiplex signal of each of top and bottom panels can be transmitted without degradation of an S/N ratio at the time of regeneration. On the other hand, in a case that the broadcasting signal is received by a conventional receiver presently used, interference, which is caused by the multiplex signals of the top and bottom panels, can be reduced without causing an erroneous operation such as synch separation.

In order to attain the above object, according to a first aspect of the present invention, there is provided an apparatus for controlling a DC (It means low frequency signal) level of an additional signal to be transmitted as a part of a television signal and transmitting the additional signal, characterized in that setup compensation means (301) is provided to suitably reduce the positive peak level of an amplitude of the additional signal in accordance with a value of the amplitude.

According to a second aspect of the present invention, there is provided an apparatus for controlling a DC level of an additional signal and transmitting the additional signal, characterized by comprising high frequency component extracting means for extracting a high frequency component of the additional signal to be transmitted as a part of a television signal; amplitude detecting means for detecting an amplitude of the high frequency component obtained by the high frequency component extracting means so as to obtain an amplitude detection output; non-linear processing means for providing non-linear processing to the amplitude detection output; filter means for providing a bandwidth limitation to an output of the non-linear processing means to obtain an amplitude adaptive signal; and transmitting means for transmitting a signal obtained by subtracting/ adding the amplitude adaptive signal (DC level control signal) from/to the additional signal to be transmitted.

According to a third aspect of the present invention, there is provided an apparatus for controlling a DC level of an additional signal and receiving the additional signal, characterized by comprising: receiving means for receiving a multiplex signal obtained by subtracting/adding an amplitude adaptive signal from/to the additional signal to be transmitted, the amplitude adaptive signal obtained by providing a bandwidth limitation to an amplitude detection output, the amplitude detection output obtained by detecting an amplitude of a high frequency component of the additional signal to be transmitted as a part of a television signal; high frequency component extracting means for extracting the high frequency component of the multiplex signal; amplitude detecting means for detecting an amplitude of the high frequency component to obtain an amplitude detection output; non-linear processing means for providing non-linear processing to the amplitude detection output; filter means for providing a bandwidth limitation to an output of the non-linear processing means to obtain an amplitude adaptive signal; and regenerating means for obtaining a regenerative additional signal by adding/subtracting the amplitude adaptive signal to/from the multiplex signal.

This invention can be more fully understood from the following detailed description when taken in conjunction with the accompanying drawings, in which:
FIG. 1 is a view explaining a screen in a letter box system;
FIG. 2 is a view showing an encoder of an embodiment of the present invention;
FIG. 3 is a view showing a decoder of an embodiment of the present invention;
FIGS. 4A and 4B are views showing the structure of the encoder of a setup compensating circuit, which is the main part of the present invention and that of the decoder, respectively;
FIGS. 5A to 5E are views of a signal waveform explaining an example of an operation of the setup compensating circuit of FIG. 4A; and
FIGS. 6A and 6B are views showing a spectrum characteristic of a signal of each portion of the setup compensating circuit of FIG. 4B.

An embodiment of the present invention will be explained with reference to the drawings.

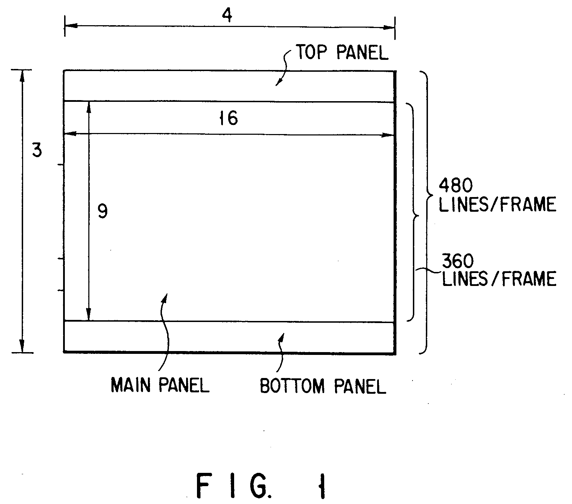

FIG. 1 shows the structure of a screen by a transmission of a letter box system. In the letter box system, a long widthwise image having an aspect ratio of 16:9 and 360 scanning lines [lines/frame] at the central portion (main panel) of a screen having an aspect ratio of 4:3 and 480 active scanning lines [lines/frame] defined by the NTSC system presently used. Due to this, since only image data using only a 3/4 of the active scanning lines, which are defined by the original NTSC system, can be transmitted to the main panel, vertical resolution is inevitably deteriorated to 3/4. On the other hand, in the television signal of the letter box system, there are areas each having 60 scanning lines [lines/frame], serving as non-imaging portions, at the top and bottom panels of the screen. Then, a helper signal for compensating for deterioration of the image of the main panel is transmitted by use of the top and bottom panels.

As a system of the letter box system, the following will explain a system for transmitting difference signals between lines by utilizing the top and bottom panels (hereinafter called as LD system). The LD system explains as follows:
There is generated a differential signal between scanning lines, which is removed when converting a progressive scanning signal to an interlaced scanning signal in a transmitter, and a scanning line to be restored, which is to be generated by use of the interlaced signal in a receiver side. The differential signal is multiplexed to the top and bottom panels, and positioned as a helper signal.

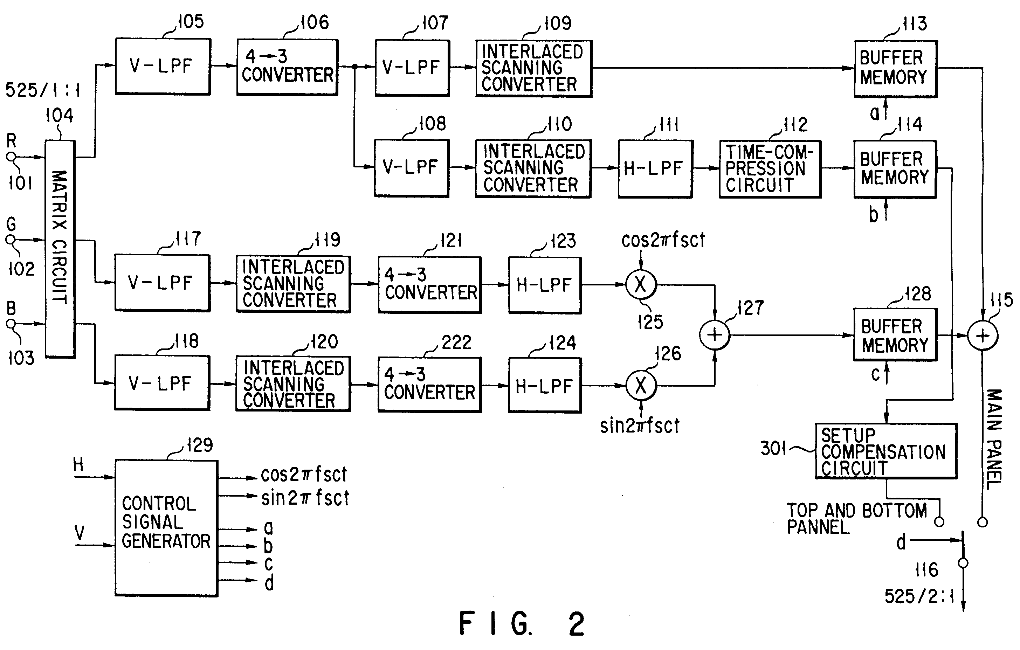

FIG. 2 shows an encoder of the LD system.

Signals R, G, and B, which are progressive scanning signals having 525 scanning lines, frame frequency of 59.94 (Hz), and aspect ratio of 16:9, are inputted into a matrix circuit 104 through input terminals 101, 102, and 103, respectively. The matrix circuit 104 matrix-calculates signals R, G, B, and generates a luminance signal (signal Y) and two color-difference signals (signals I and Q).

The signal Y is inputted to a vertical low pass filter (V-LPF) 105, and its bandwidth is limited such that alias artifact of noise does not appear. An output of the vertical low pass filter 105 is inputted to a 4 → 3 converter 106 for converting the number of scanning lines, and the number of active lines is converted from 480 to 360. An output of the 4 → 3 converter 106 is inputted to a vertical low pass filter (V-LPF) 107 and a vertical high pass filter (V-HPF) 108.

The output of the vertical low pass filter 107 is inputted to an interlaced scanning converter 109, and used as a main panel signal of an encode output. An output of the vertical high pass filter 108 is inputted to an interlaced scanning converter 110, and converted to an interlaced scanning signal. The bandwidth of the interlaced scanning signal is limited by a horizontal low pass filter (H-LPF) 111 such that the bandwidth after time-compression is provided does not exceed the broadcasting format presently used. An output of the horizontal low pass filter 111 is inputted to a time compression circuit 112 so as to be time-compressed to 1/3. An output of the time compression circuit 112 is inputted to a buffer memory 114. In a case that a signal of the buffer memory 114 is outputted, 360 scanning lines are vertically time-compressed to 1/3, aligned on one scanning line to be transmitted three by three, and allocated to 120 scanning lines of the top and bottom panels.

The signal outputted from the buffer memory 114 is supplied to one input terminal of a selector 116 by a setup compensation circuit 301 to be described later.

On the other hand, signals I and Q are inputted to the vertical low pass filters (V-LPF) 117 and 118, respectively, and its bandwidth is limited such that alias artifact does not appear in 4 → 3 conversion is performed after the interlaced scanning conversion. Outputs of the vertical low pass filters 117 and 118 are respectively inputted to interlaced scanning converters 119 and 120, and converted to interlaced scanning signals. Thereafter, the interlaced scanning signals are inputted to 4 → 3 converters 121 and 122. By use of 4 → 3 converters 121 and 122, the scanning conversion in the field is performed, so that the signals are converted to interlaced scanning signals having 360 effective scanning lines. The outputs of the 4 → 3 converters 121 and 122 are limited to the bandwidth of the broadcasting format, which is presently used, by horizontal low pass filters (H-LPF) 123 and 124, inputted to multipliers 125 and 126, respectively, and a sub-carrier with frequency fsc (455/2fh: fh is a horizontal scanning frequency) is modulated by the signals. Outputs of the multipliers 125 and 126 are added by an adder 127, and served as a color signal C. The color signal C is multiplexed to the main panel signal.

An output of the interlaced converter 109 and that of the adder 127 are inputted to buffer memories 113 and 128, respectively, and delay-adjusted. Outputs of the buffer memory 113 and 128 are inputted to an adder 115, and outputted as a composite signal for the main panel portion. An output (main panel signal) of the adder 115 and an output (top and bottom panel signal) of a setup compensation circuit 301 are selectively introduced by timing of the top panel and the bottom panel by the selector 116, and outputted as an interlaced scanning signal having 525 scanning lines. The output of the encoder is used as a signal of letter box type (FIG. 1).

A horizontal synch signal H and a vertical synch signal V, which are separated from the previous progressive scanning signal, are inputted to a control signal generator 129. Then, the control signal generator 129 generates control signals a, b, c to a sine wave of the carrier frequency fsc and a cosine wave of the carrier frequency fsc and buffer memories 113, 114, and 128, and a select signal d.

The above-mentioned encoder is characterized in the point that the setup compensation circuit 301 is provided in the system of the signal outputted from the buffer memory 114. The setup compensation circuit 301 processes to reduce the setup level of the signal, which is visually prominent.

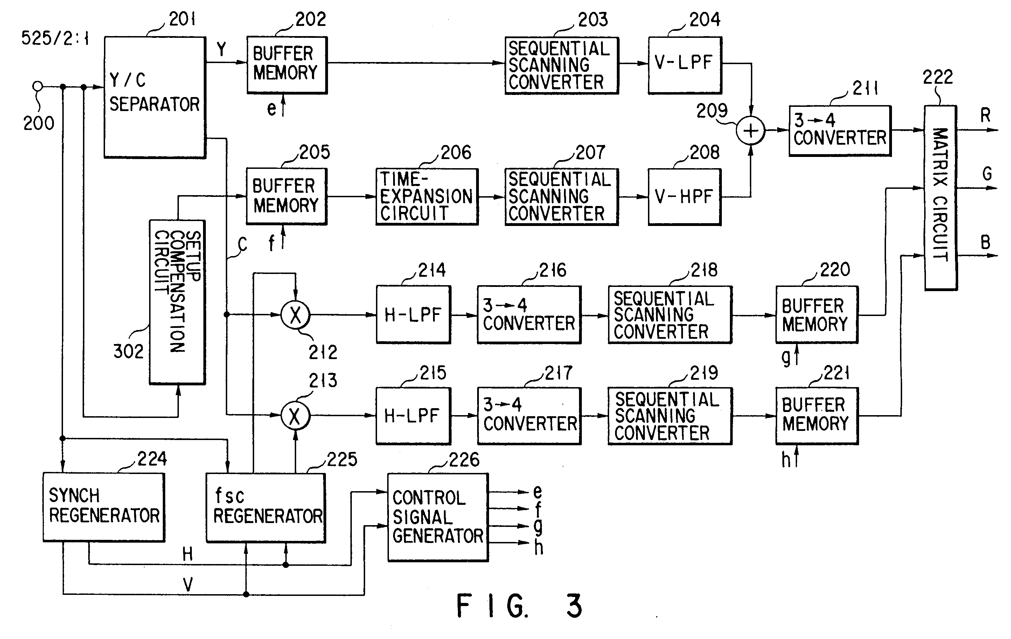

FIG. 3 shows the structure of the decoder.

The above-mentioned encode signal is inputted to a Y/C separation circuit 201, a setup compensation circuit 302, a synch regeneration circuit 224, and a fsc regenerating circuit 225 through an input terminal 200.

The Y/C separation circuit 201 separates the luminance signal Y and the color signal C. The separated Y signal is delay-adjusted by the buffer memory 202, and inputted to the progressive scanning converter 203. The progressive scanning converter 203 converts the interlaced scanning signal to the progressive scanning signal. The output of the progressive scanning converter 203 is inputted to the vertical low pass filter (V-LPF) 204, and a vertical low frequency component thereof is extracted therefrom.

The input encode signal is inputted to the buffer memory 205 through the setup compensation circuit 302. The setup compensation circuit 302 processes to rise the level of the portion, which is reduced at the transmission side of a multiple signal DC level, up to the original level. By use of the buffer 205, the multiple signals multiplexed in the top and bottom panels are rearranged to the interlaced scanning signals having frame frequency of 29.97 (Hz). The output of the buffer memory 205 is inputted to a time extension circuit 206, time-extended three times, and regenerated as an original compensation signal. The output of the time extension circuit 206 is inputted to the progressive scanning converter 207, and converted to a progressive scanning signal. Thereafter, the vertical high frequency component is regenerated through the vertical high pass filter (V-HPF) 208. The output of the vertical low pass filter 204 and that of the vertical high pass filter 208 are synthesized by an adder 209, and the synthesized signal is regenerated as a wide-range signal having 360 active scanning lines. The output of the adder 209 is inputted to a 3 → 4 converter 211 for converting the number of scanning lines, and the original progressive scanning signal having 480 active scanning lines is regenerated. On the other hand, the color signal obtained from the Y/C separation circuit 201 is inputted to multipliers 212 and 213. The color signal is multiplied by the sine wave of the carrier frequency fsc by the multiplier 212, and demodulated as a signal I. Also, the color signal is multiplied by the cosine wave of the carrier frequency fsc by the multiplier 213, and demodulated as a signal Q.

The signals I and Q outputted from the multipliers 212 and 213 are inputted to horizontal low pass filters 214 and 215, respectively, and a high frequency wave of each component is removed. The outputs of the horizontal low pass filters 214 and 215 are inputted to 3 → 4 converters 216 and 217, respectively, and each output is converted to a signal having 480 active scanning lines. The outputs of the 3 → 4 converter 216 and 217 are inputted to progressive scanning converters 218 and 219, respectively, and each output is converted to a progressive scanning signal having a frame frequency of 60 (Hz). Each of the signals I and Q outputted from the progressive scanning converters 218 and 219 is inputted to each of buffer memories 220 and 221, and delayed so as to time-adjusted to the signal Y sent from the 3 → 4 converter 211. The signals Y, I, and Q are inputted to a matrix circuit 222, and converted to component signals R, G, and B, respectively, to be outputted.

The synch regeneration circuit 224 regenerates horizontal and vertical synch signals H and V from an input encode signal, and generates a two-frame reference signal. The fsc regenerating circuit 225 generates the sine wave of the previous carrier frequency fsc and the cosine wave of the previous carrier frequency fsc based on the input encode signal and the two-frame reference signal. A control signal generator 226 generates memory control signals e, f, g, h by use of horizontal and vertical synch signals, and controls buffers 202, 205, 220, and 221.

The above encoder is characterized in the point that the setup circuit 302 is provided in the system where the input encoder signal is inputted to the buffer memory 205.

The setup compensation circuit 301 provided on the side of the encoder processes to reduce the setup level of the signal, which is visually prominent. The setup compensation circuit 302 provided on the side of the decoder processes to rise the level of the portion, which is reduced, up to the original setup level.

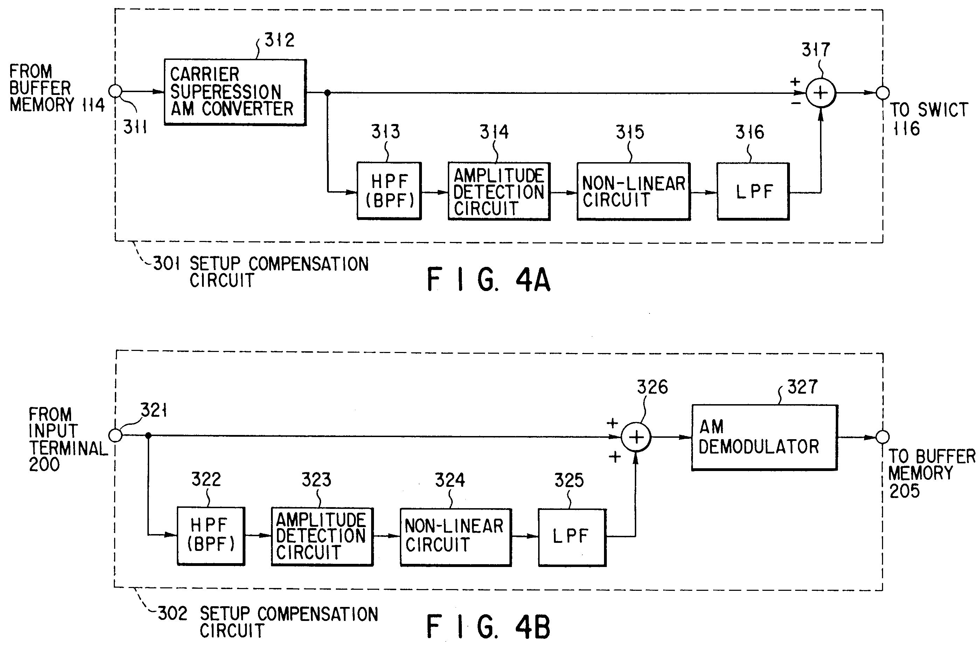

FIGS. 4A and 4B specifically show the setup compensation circuits 301 and 302.

As shown in FIG. 4A, the signal multiplexed into 120 scanning lines of the encoded top and bottom panels is inputted to a carrier compression AM modulator 312 through an input terminal 311 to modulate its amplitude. A component close to the carrier is extracted from the output of the carrier compression AM modulator 312 by a horizontal band pass filter (BPF) 313. The component close to the carrier is inputted to an amplitude detection circuit 314, thereby detecting the change of the amplitude. The amplitude detection output of the amplitude detection circuit 314 is inputted to a non-linear circuit 315. The amplitude detection output of the amplitude detection circuit 314 is clipped by the non-linear circuit 315 if the amplitude detection output of the amplitude detection circuit 314 is set to be a predetermined level or more. Also, the amplitude detection output of the amplitude detection circuit 314 is maintained as it is if the amplitude detection output of the amplitude detection circuit 314 is set to be a low level. The output of the non-linear circuit 315 is inputted to the a horizontal low pass filter (LPF) 316. Then, a high frequency component generated by non-linear processing is removed, and the output of LPF 316 is inputted to a subtracter 317. In the subtracter 317, the output of the carrier compression AM modulator 312 is inputted, and the output of the LPF 316 is subtracted from the modulation signal. Thereby, the setup level of the signal, which is easily detected as interference in each of the top and bottom panels, can be decreased, so that interference can be reduced.

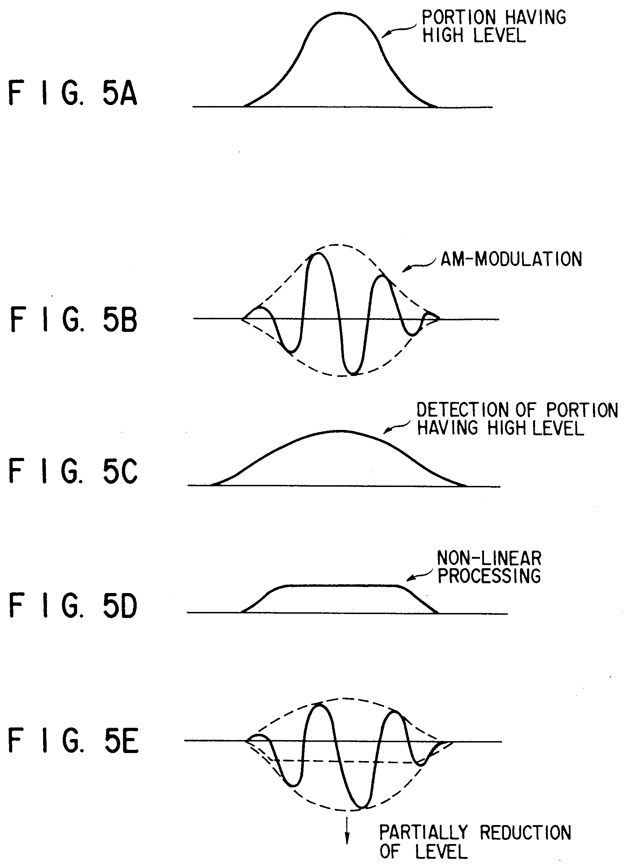

FIGS. 5A to 5E show examples of signal waves for explaining the operation of compensating for the setup of the setup compensation circuit 301.

In a case that a signal as shown in FIG. 5A is inputted, the output of the carrier compression AM modulator 312 is shown as in FIG. 5B. A component close to the carrier is extracted from the output of the carrier compression AM modulator 312 by the horizontal band pass filter 313. Then, the component is inputted to the amplitude detection circuit 314, and its amplitude is detected, so that the amplitude detection output is shown as in FIG. 5C. The correlation between the obtained amplitude component of FIG. 5C and the carrier compression AM modulation output (FIG. 5B) is considerably high. FIG. 5D shows a waveform, which is obtained by providing non-linear processing to the amplitude detection output of FIG. 5C by the non-linear circuit 315.

In the non-linear processing, if the amplitude detection output exceeds a predetermined level, the amplitude detection output is clipped so as to prevent the level of the carrier compression AM modulation output from being excessively reduced. Also, since there is no set-up level reduction effect when the amplitude of the carrier compression AM modulation output is low, such a setup level reduction is not performed. The waveform shown in FIG. 5D is generated in accordance with the modulation waveform shown in FIG. 5B. Due to this, the setup level of the waveform of FIG. 5B is reduced by the level of the waveform of FIG. 5D, so that the setup level is reduced only when the amplitude of the carrier compression AM modulation output is high. In other words, only when there exists the large amplitude signal, which is visually and easily detected as interference, the set-up level is reduced, so that interference is not easily perceptible in the non-imaging panels (top and bottom panels) at the conventional receiver presently used.

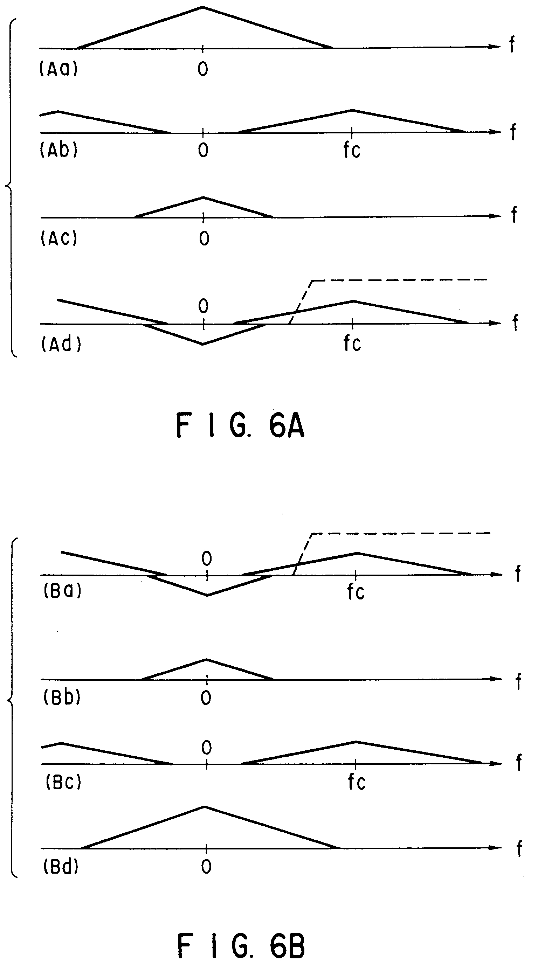

FIG. 6A shows a spectrum characteristic in a case that the setup compensation is performed in the encoder wherein a horizontal axis f = frequency and a vertical direction = level.

If a multiplex signal, which is time-compressed, shown in (Aa) of FIG. 6A is inputted and modulated signal, a characteristic shown in (Ab) of FIG. 6A can be obtained. If a component close to frequency fc is extracted and amplitude detection is performed, a horizontal low component can be obtained as shown in (Ac) of FIG. 6A. Therefore, the component shown in (Ac) of FIG. 6A is subtracted from the component shown in (Ab) of FIG. 6A, thereby obtaining a spectrum characteristic as shown in FIG. (Ad) of FIG. 6A.

In the receiver, if the component close to the carrier fc is extracted through a characteristic filter shown in a broken line of (Ad) of FIG. 6A and an amplitude detection is performed, a component of (Ac) of FIG. 6A can be obtained. Moreover, it is considered that there is possibility that unfavorable influence is exercised on the synch separation in the receiver presently used if the setup level is relatively decreased. However, in most cases, there is no problem since the top and bottom panels are partially compensated.

Back to FIG. 4, and an embodiment of the setup compensation circuit in the decoder will be explained as follows:
The setup compensation circuit 302 is provided at a front state of the buffer memory 205 for rearranging the multiplex signal in order to regenerate the setup level compensation performed in the encode processing. The multiplex signal (FIG. 5E), which is inputted to an input terminal 321, is inputted to a horizontal band pass filter 322, and the component close to the carrier fc is separated. An output of the horizontal band pass filter 322 is inputted to an amplitude detection circuit 323, and an amplitude of the original horizontal low frequency component (FIG. 5C) is regenerated. An output of the amplitude detection circuit 323 is clipped by a non-linear circuit 324 if the amplitude detection output of the amplitude detection circuit 323 is set to be a predetermined level or more. Also, the amplitude detection output of the amplitude detection circuit 323 is maintained as it is the amplitude detection output of the amplitude detection circuit 323 is set to be a low level, whereby a waveform of FIG. 5D is completed. An output of the non-linear circuit 324 is inputted to a horizontal low pass filter (LPF) 325. Then, a high frequency component generated by non-linear processing is removed.

In the above-mentioned processing, the same operation as the circuit portion for generating an extraction circuit by the setup compensation circuit 301 in the encoder. Then, the signal inputted to the input terminal 321 (5E) and an output of the horizontal low pass filter 325 are added by an adder 326, thereby obtaining a modulation signal having the original amplitude (5B). The modulation signal is demodulated by an AM demodulator 327, and restored to the original signal as shown in FIG. 5A.

FIG. 6B shows a characteristic of the setup compensation circuit 302 of the decoder. In the transmitted multiplex signal shown in (Ba) of FIG. 6B, the component close to the carrier fc is extracted by the horizontal band pass filter 322, and the amplitude of the component is detected by the amplitude detection circuit 323. Due to this, a low frequency component as shown in (Bb) of FIG. 6B is regenerated by the detector 323. The regenerated low frequency component is the same as the horizontal low frequency component setup-compensated by the encoder. Due to this, the regenerated low frequency component is added to the transmitted multiplex signals by the adder 326, so that the quantity of the reduced level is increased. Therefore, as shown in (Bc) of FIG. 6B, only the AM-modulated component is left, and AM-demodulated, so that the original time-compressed signal is regenerated as shown in (Bd) of FIG. 6B.

As mentioned above, in the measurement for reducing interference, since only the setup level is reduced based on the component of the multiplex signal itself, there is no deterioration of the level of the entire multiplex signal. Due to this, the S/N ratio of the multiplex signal itself is not degraded even if the interference is reduced. In other words, by use of the point that the signal is made not to be perceptible prominent, if the setup level is reduced, the setup level of the multiplex signal itself is reduced only when the signal level is high. Only the signal, which is easily perceptible, can be made to not to be perceptibly prominent. Moreover, since there is no level variation of the entire multiplex signal, there occurs no degradation of the regenerated multiplex signal even if the interference is reduced.

According to the above-mentioned embodiment of the present invention, the signals to be transmitted to the top and bottom panels are used as a vertical helper signal. However, the present invention is not limited to the above case. It is of course that the present invention can be applied to a case that various types of additional signals are transmitted.

According to the present invention, in the transmitting/receiving apparatus for the wide image television broadcasting signal having compatibility with the receiver presently used, the multiplex signals of the top and bottom signals can be transmitted without generating problems such as an S/N ratio at the time of reproduction. On the other hand, in the case that the television signal is received by the conventional receiver presently used, it is possible to reduce interference, which is caused by the multiplex signals of the top and bottom panels, without generating erroneous operations such as a synch separation.

According to the present invention, in the transmitter side, the component, whose low bandwidth of the signal to be originally transmitted to the top and bottom panels is removed, is extracted through the filter, the amplitude of the extracted signal is detected, the amplitude of the detected signal is limited by the non-linear circuit, the signal whose amplitude is limited is passed through the filter to remove the high frequency component is generated, the generated signal is subtracted from the signal to be original transmitted, and the signal obtained by the subtraction is multiplexed and transmitted to the top and bottom panels. In the receiver side, the component, whose low frequency of the signal to be originally transmitted to the top and bottom panels is removed, is extracted by the filter, the amplitude of the extracted signal is detected, the amplitude of the detected signal is limited by the non-linear circuit, the signal whose amplitude is limited is passed through the filter to remove the high frequency component is generated, the generated signal is added to the signals transmitted to the top and bottom panels, thereby regenerating the signal to be originally transmitted to the top and bottom panels.

By use of the above-mentioned means, in the transmitter side, the component whose low frequency is removed is extracted from the signal, which is originally transmitted to the top and bottom panels, through the filter, and the amplitude of the extracted component is detected. Although the detected amplitude of the signal is not as large as that of the signal to be originally transmitted, it can be regarded that the signal has extremely high correlation with the signal to be originally transmitted.

The non-linear circuit operates in the cases that the amplitude of the signal to be transmitted is large and small. In the case that the amplitude of the signal to be transmitted is large, the amplitude is limited such that the setup reduction to a negative direction is not excessively performed in the following processing. In the case that the amplitude of the signal to be transmitted is small, the operation of the setup reduction is stopped. From the output of the non-linear circuit, there is generated the signal wherein the high frequency component is removed through the filter and only the low frequency component is contained. Then, the generated signal is subtracted from the signal to be originally transmitted, so that the setup is appropriately reduced.

Therefore, in the case that the transmission signal is received by the receiver, the setup level is reduced, and is not easily detected as disturbance if the level of the multiplex signal of the top and bottom panels is higher than the predetermined value. Moreover, since the setup level is partially reduced, the synch separation circuit of the receiver presently used is little erroneously operated.

In the receiver side, the component, whose low frequency of the signal to be originally transmitted to the top and bottom panels is removed, is extracted through the filter. Due to this, the receiver is not influenced by the low frequency component used in reducing the setup in the transmission. Therefore, the amplitude detection, non-linear processing, amplitude limitation, and filter processing are provided to the multiplex signals transmitted to the top and bottom panels in the same manner as the transmitter side, whereby the setup reduction signal, which is generated in the transmitter side, can be also generated in the receiver side. Moreover, if the generated signal is added to the signals transmitted to the top and bottom panels, the quantity of the level, which is reduced in the transmitter side, is increased, so that the signal to be originally transmitted is regenerated.

## Claims

1. An apparatus for controlling a setup level of an additional signal to be transmitted as a part of a television signal and transmitting said additional signal, characterized in that setup compensation means (301) is provided to suitably reduce a high portion of the level of an amplitude of said additional signal in accordance with a value of said amplitude.

2. An apparatus for controlling a setup level of an additional signal and transmitting said additional signal, characterized by comprising:
high frequency component extracting means (313) for extracting a high frequency component of the additional signal to be transmitted as a part of a television signal;
amplitude detecting means (314) for detecting an amplitude of the high frequency component obtained by said high frequency extracting means so as to obtain an amplitude detection output;
non-linear processing means (315) for providing non-linear processing to said amplitude detection output;
filter means (316) for providing a bandwidth limitation to an output of said non-linear processing means to obtain an amplitude adaptive signal; and
transmitting means (317) for transmitting a signal obtained by subtracting/adding said amplitude adaptive signal from/to said additional signal to be transmitted.

3. An apparatus for controlling a level of an additional signal and receiving said additional signal, characterized by comprising:
receiving means (321) for receiving a multiplex signal obtained by subtracting/adding an amplitude adaptive signal from/to said additional signal to be transmitted, said amplitude adaptive signal obtained by providing a bandwidth limitation to an amplitude detection output, said amplitude detection output obtained by detecting an amplitude of a high frequency component of the additional signal to be transmitted as a part of a television signal;
high frequency component extracting means (322) for extracting the high frequency component of said multiplex signal;
amplitude detecting means (323) for detecting an amplitude of said high frequency component to obtain an amplitude detection output;
non-linear processing means (324) for providing non-linear processing to said amplitude detection output;
filter means (325) for providing a bandwidth limitation to an output of said non-linear processing means to obtain an amplitude adaptive signal; and
regenerating means (326, 327) for obtaining a regenerative additional signal by adding/subtracting said amplitude adaptive signal to/from said multiplex signal.

4. The apparatus according to claim 1, characterized in that a main panel of the television signal is set to correspond to a center of a screen, said apparatus is included in a transmitting apparatus for multiplexing a helper signal and transmitting said signal to top and bottom panels of the screen, and said additional signal is multiplexed to said top and bottom panels.

5. The apparatus according to claim 3, characterized in that said receiving means separates said multiplex signal from the top and bottom panels of the screen of the television signal.

6. The apparatus according to one of claims 1 and 2, characterized in that said additional signal to be transmitted is amplitude-modulated.

7. An apparatus for controlling a level of an additional signal and transmitting said additional signal, characterized in that setup compensation means (301) is provided to suitably reduce a high portion of the level of an amplitude of said additional signal in accordance with a value of said amplitude when a reinforcing signal is multiplexed to each of top and bottom panels in a television signal transmitting apparatus wherein a main panel of the television signal is set to correspond to a center of a screen, said helper signal having an image quality of said main panel section is set to correspond to each of top and bottom panels of the screen, and a television signal of a letter box type receivable by even a receiver presently used is transmitted.

8. An apparatus for controlling a setup level of an additional signal and receiving said additional signal, characterized in that setup compensation means (302) is provided such that a low frequency component obtained by suitably extracting a portion having a high level of an amplitude of a multiplex signal of each of top and bottom panels is added to a transmitted multiplex signal when a reinforcing signal of each of top and bottom panels of a screen is regenerated in a television signal transmitting apparatus wherein a main panel of the television signal is set to correspond to a center of the screen, said helper signal having an image quality of said main panel section is set to correspond to each of top and bottom panels of the screen, and a television signal of a letter box type receivable by even a receiver presently used is transmitted.
